# EUROPÄISCHE PATENTSCHRIFT

(11) **EP 0 912 288 B1**
(45) Veröffentlichungstag und Bekanntmachung des Hinweises auf die Patenterteilung: **09.02.2000**
(21) Anmeldenummer: 97931748.4
(22) Anmeldetag: 03.07.1997
(51) Int. Cl.: B23K 10/02, H05H 1/34

(54) **VERFAHREN ZUM BESCHICHTEN ODER SCHWEISSEN LEICHT OXIDIERBARER WERKSTOFFE SOWIE PLASMABRENNER DAFÜR**
PROCESS FOR COATING OR WELDING EASILY OXIDISED MATERIALS AND PLASMA TORCH FOR CARRYING OUT THIS PROCESS
PROCEDE POUR ENDUIRE OU SOUDER DES MATERIAUX FACILEMENT OXYDABLES ET CHALUMEAU AU PLASMA POUR METTRE EN OEUVRE CE PROCEDE

(30) Priorität: 04.07.1996 DE 19626941
(43) Veröffentlichungstag der Anmeldung: 06.05.1999
(73) Patentinhaber: CASTOLIN S.A., CH-1025 Lausanne - St. Sulpice (CH)
(72) Erfinder: DVORAK, Michael, CH-1022 Chavannes (CH); ROBERT, Patrice, F-74500 Evian (FR)
(74) Vertreter: Hiebsch, Gerhard F., Dipl.-Ing.
(86) Internationale Anmeldenummer: EP9703487
(87) Internationale Veröffentlichungsnummer: WO9801256

(56) Entgegenhaltungen:
- EP-A- 0 452 494
- EP-A- 0 706 308
- DE-A- 2 107 057
- DE-A- 3 544 657
- US-A- 5 045 667
- PATENT ABSTRACTS OF JAPAN vol. 16, no. 44 (M-1207), 4.Februar 1992 & JP 03 248777 A (NISSAN MOTOR CO LTD ET AL.), 6.November 1991,
- DATABASE WPI Section PQ, Week 8412 Derwent Publications Ltd., London, GB; Class P55, AN 84-073104 XP002043383 & SU 1 018 822 A (KRUCHININ I I) , 23.Mai 1983

## Beschreibung

Die Erfindung betrifft ein Verfahren zum Beschichten von Werkstoffe durch Plasma-Pulverauftragsschweißen pulverförmiger Zusatzstoffe Zudem erfaßt die Erfindung einen Plasmabrenner mit stabartiger Kathode sowie diese umgebendem Gaskanal einer Brennerdüse, dem ein Düsendurchbruch engeren Querschnittes nachgeordnet ist, und ein Verfahren zum Beschichten der stabartigen Kathode oder eines Kathodenteils.

Das Beschichten von Werkstoffen auf Eisenbasis mit pulverförmigen Werkstoffen auf Nickel-, Kobalt- und/oder Kupferbasis wird seit langem in der Industrie durchgeführt. Beim Auftragen von leicht oxidierenden Werkstoffen wie etwa Aluminium, Titan, deren Legierungen ist durch die sich an der Oberfläche ausbildenden Oxide der Beschichtungs- vorgang sehr stark gestört, gegebenenfalls gänzlich undurchführbar.

Auch Versuche, diese Vorgänge unter einem Schutzgas zu halten, schlugen fehl. Die einzige Möglichkeit für einen solchen Beschichtungs- vorgang ist das sehr kostspielige und umständliche Arbeiten unter Vakuum, das nie zu einer großtechnischen Anwendung geführt hat.

Nach JP-A-03 248 777 wird ein Schweißstrom zwischen einer unverzehrbaren Elektrode sowie einer Platte aus einer Aluminiumlegierung von einer Wechselstromquelle erzeugt. Die Aluminiumlegierung enthält 15 bis 55 Gew.-% Cu und dient als Aufbauwerkstoff, zu dessen Ausbildung ein Wechselstrom-Plasmabogen eingesetzt wird.

Die EP-A-0 452 494 beschreibt einen Plasmabrenner mit zylindrischer Elektrode und in dieser befindlichem Einsatzstück. Die Endkanten der Elektrode sind bei einer dem Stande der Technik zugehörigen Ausgestaltung leicht gerundet.

Aus der DE-A-35 44 657 ist eine Hochstromelektrode aus einem wärme- und stromleitenden Material bekannt, die zur Verringerung des Abbrands der Elektrode auf dem Elektrodengrundkörper eine Beschichtung aufweist. Diese Beschichtung wird im Plasmaspritzverfahren aufgebracht. Das Spritzpulvergemisch für die Beschichtung besteht aus W und wenigstens 4 Gew.-% ThO₂ oder CeO₂ bzw. aus W und wenigstens 1 Gew.-% Oxiden, Karbiden, Boriden mit hoher Schmelztemperatur und niederer Elektronen-Austrittsarbeit.

In Kenntnis dieser Gegebenheit hat sich der Erfinder das Ziel gesetzt, das Beschichten von leicht oxidierenden Werkstoffen -- insbesondere von Leichtmetallen -- auf einfache und kostengünstige Weise zu ermöglichen.

Zur Lösung dieser Aufgabe führen die Lehren der unabhängigen Patentansprüche; die Unteransprüche geben bevorzugte Ausgestaltungen an.

Erfindungsgemäß wird -- nach umfangreichen Versuchen auf einer Aluminiumlegierung eine Beschichtung mit einem pulverförmigen Zusatzwerkstoff durch Pulverauftragsschweißen mit übertragenem Plasmalichtbogen (PTA = Plasma Transferred Arc) aufzubringen -- der Einsatz eines Wechselstroms in einem Frequenzbereich zwischen etwa 10 und 100 Hz oder eines Gleichstroms als Energieträger mit einem überlagerten Wechselstrom einer Frequenz zwischen etwa 10 bis 1000 Hz oder im Frequenzbereich zwischen etwa 1 bis 200 KHz vorgeschlagen; hierbei soll an einer aus einer Elektrode -- vor deren Einsatz -- herausgeformten sphärischen oder kugelförmigen Ausformung ein Fußpunkt des Plasmalichtbogens hergestellt werden. Dank dieser Maßgaben wird die sich durch den Luftsauerstoff bzw. den Restsauerstoff im Schutzgas ausbildende Oxidhaut an der Oberfläche des Grundwerkstoffes oder des pulverförmigen Zusatzwerkstoffes zerstört bzw. aufgerissen, und es wird möglich, Beschichtungen auch auf oder mit diesen leicht oxidierenden Werkstoffen durchzuführen und eine gute Schweißqualität zu erzielen.

Von Vorteil ist es auch, einen hohen Aufmischungsgrad mit dem Grundwerkstoff anzustreben sowie ferner, die Strömungsgeschwindigkeit der austretenden Gase erfindungsgemäß so zu wählen, daß die sich durch den Rest-Sauerstoff bildenden Oxide oder Schlacken durch die Gasströmung zerrissen und am Rande des Schmelzbades abgelagert werden.

Im Rahmen der Erfindung liegt zudem ein Plasmabrenner mit einem Düsendurchbruch engeren Querschnitts vorgeordnetem Gaskanal einer Brennerdüse sowie mit einer stabartigen Kathode, die für das Arbeiten mit einem überlagerten Wechselstrom zum Transferieren des Plasmas endwärts mit jener gerundeten Anformung versehen, insbesondere kugelartig ausgeformt, ist.

Ein Plasmabrenner für einen übertragenen Lichtbogen der eingangs genannten Art mit rundum angefastem freiem Ende einer -- vor einer dem Düsendurchbruch vorgeordneten Kammer stehenden -- Rundstabelektrode ist zwar aus der EP-A-0 452 494 bekannt. Jedoch findet sich dort kein Hinweis auf die hier angebotene erfindungsgemäße Lösung.

Beim anmeldungsgemäßen Plasmabrenner kann die bauchige Anformung der Kathode so angeordnet sein, daß sie eine durch die Stirnfläche einer die Kathode umfangenden Anode bestimmte Ebene tangiert oder letztere ein wenig -- etwa höchstens 3 bis 4 mm -- nach außen überragt.

Bevorzugt wird eine Anordnung mit in den Gaskanal der Brennerdüse zurückgenommener Kathode, deren sphärische Anformung dann in einem kurzen Abstand -- von ebenfalls höchstens 4 mm -- zu jener Ebene sowie in Spaltabstand zu einem Schulterabsatz, der einen Übergang zwischen dem Gaskanal und dem nachfolgenden Düsendurchbruch engeren Querschnittes bildet. An diesen ringartigen Schulterabsatz schließt ein zylindrischer Abschnitt des Gaskanals als Aufnahme für die Anformung der Kathode an und begrenzt mit dieser und dem Schulterabsatz den Gasdurchlaß.

Als günstig hat es sich erwiesen, die mit einem Wechselstrom oder mit einem Gleichstrom samt überlagertem Wechselstrom beaufschlagte Kathode mit einer Wasserkühlung auszustatten. Die Kathode kann beispielsweise als wassergekühlter Tragkörper mit austauschbar angesetztem Kathodenteil -- aus hochschmelzendem Werkstoff mit geringer Wärmeleitfähigkeit -- für die Anformung bzw. für den Fußpunkt des Lichtbogens ausgebildet werden; den Tragkörper formt man vorteilhafterweise aus Kupfer oder einer Kupferlegierung.

Als Werkstoff für die Kathode oder den austauschbaren Kathodenteil wählt man bevorzugt Wolfram oder eine Wolframlegierung, wobei Thorium Legierungsbestandteil sein kann. Zudem mag die Kathode oder der austauschbare Kathodenteil Kupfer zum Infiltrieren sowie das Wolfram oder die Wolframlegierung als Tränkwerkstoff aufweisen.

Auch besteht die Möglichkeit, die Kathode oder den austauschbaren Kathodenteil aus einem hochschmelzenden Nitrid, Karbid, Borid oder Silicid geringen elektrischen Widerstandes herzustellen, etwa aus Titankarbid oder einer Titankarbid-Sinterlegierung.

Nach einem weiteren Merkmal der Erfindung soll die Kathode oder der austauschbare Kathodenteil aus mit Wolfram, Titankarbid, Titannitrid, Hafniumnitrid und/oder Chromkarbid beschichtetem Kupfer oder aus einer entsprechend beschichteten Kupferlegierung bestehen.

Das Beschichten von Kathode oder Kathodenteil erfolgt bevorzugt durch thermisches Spritzen oder mittels eines CVD-Beschichtungsverfahrens (Chemical Vapor Deposition) oder eines PVD-Beschichtungsverfahrens (Plasma Vapor Deposition).

Der beschriebene Plasmabrenner bzw. dessen Kathode wird besonders günstig zum Beschichten oder Schweißen von
* Aluminium- oder Aluminiumlegierungen;
* Titan oder Titanlegierungen;
* Magnesium oder Magnesiumlegierungen
eingesetzt.

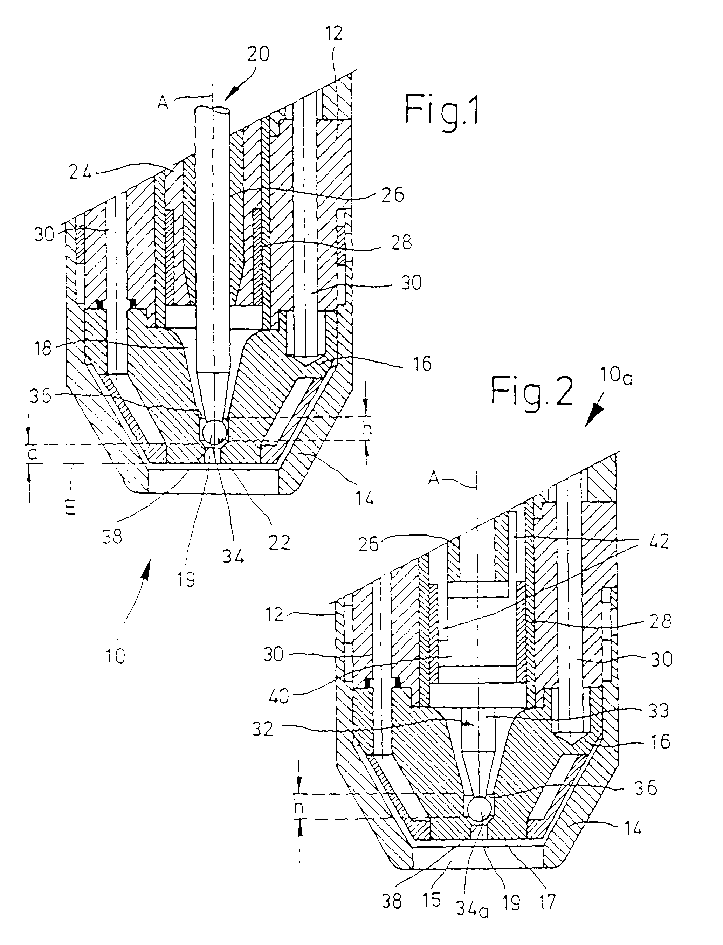

Weitere Vorteile und Einzelheiten der Erfindung ergeben sich aus der nachfolgenden Beschreibung bevorzugter Ausführungsbeispiele sowie anhand der Zeichnung; diese zeigt in einem Teillängsschnitt durch den Kopf einer Brennerdüse zum Beschichten oder Schweißen von leicht oxidierbaren pulverförmigen Zusatzstoffen in
- Fig. 1, 2:: jeweils eine Stiftkathode mit dreidimensional ausgeformtem Fußpunkt für einen Plasmalichtbogen.

An einer Brennerdüse 10 ist auf einen Düsenkörper 12 eine Schutzgaskappe 14 aufgesetzt, die eine Anode 16 umgibt. In Längsachse A der Brennerdüse 10 verläuft in Fig. 1 eine -- einen axialen Gaskanal 18 der Anode 16 durchgreifende -- stabförmige Kathode 20. Diese endet mit einer Anformung 34 an einer von der Mündung 22 des Gaskanals 18 bzw. von der Stirnfläche 17 -- Fig. 2 -- der Anode 16 bestimmten Ebene E nahe einem Durchlaß 15 in der Schutzgaskappe 14. Die Anformung 34 liegt an einem zylindrischen Düsendurchbruch 19 des Gaskanals 18 in einem Abstand a von etwa 3 mm zu jener Mündungsebene E in einem Zylinderabschnitt 36 der Höhe h des Gaskanals 18 sowie in Spaltabstand zu einem schrägen Schulterring 38 gegenüber. An diesem geht der Zylinderabschnitt 36 des sich außerhalb dessen verjüngenden Gaskanals 18 in den zylindrischen Düsendurchbruch 19 -- zum Zylinderabschnitt 36 -- geringeren Durchmessers über.

Der Kathode 20 sind -- innerhalb einer zylindrischen Spanneinrichtung 24 vorgesehene -- Kontaktteile 26 zugeordnet, die mit ihrer Spanneinrichtung 24 in einer Isolierung 28 ruhen. Letztere ist ihrerseits in jenem Düsenkörper 12 untergebracht. Im Düsenkörper 12 sind in Abstand zur Isolierung 28 achsparallele Wasserkühlkanäle 30 zu erkennen.

Bei der Ausgestaltung einer Brennerdüse 10ₐ nach Fig. 2 enthält deren Kathode 32 einen Kathodenteil in Form einer kurzen Stiftkathode 33 aus hochschmelzendem Werkstoff sowie von geringer Wärmeleitfähigkeit für die gerundete Anformung 34ₐ. Der Kathodenteil 33 ist axial an einen Tragkörper 40 aus Kupfer angeschraubt. Letzterer ist mit einer Wasserkühleinrichtung 42 verbunden.

Nicht dargestellt ist eine Ausführung, bei der die Anformung 34 jene Stirnfläche 17 bzw. Ebene E um ein Maß von bis zu 4 mm -- bevorzugt bis zu 3 mm -- überragt.

Jene Anformung 34, 34ₐ wird beim Anlegen eines Stromes während des Plasma-Pulverauftragsschweißen zum Fußpunkt des entstehenden Plasmalichtbogens. Die beispielsweise aus Wolfram oder einer Wolfram-Legierung geformte Stiftkathode 20, 33 wird mit Wechselstrom in einem Frequenzbereich zwischen 10 und 100 Hz betrieben.

### Beispiel einer Anwendung:

An einem Motorenteil aus Aluminiumguß sollte ein Sitz mit einer Verschleißschutzschicht versehen werden. Zur Bildung der Schicht wurde eine Aluminiumlegierung folgender Zusammensetzung (in Gew.-%) herangezogen:

| | |
|---|---|
| Si | 5,0; |
| Cu | 3,0; |
| Mg | 0,5; |
| Al | Rest. |

Da der Beschichtungsvorgang mittels einer Plasmapulverauftrags-Schweißanlage serienmäßig erfolgen sollte, eignete sich am besten ein Verfahren, das sich leicht automatisieren läßt.

Es wurde eine Brennerdüse 10 mit Stiftkathode 32 eingesetzt; nach dem Umstellen der Plasmapulverauftrags-Schweißanlage auf Wechselstrom konnten die Arbeiten ohne Schwierigkeiten durchgeführt werden.

Die so aufgebrachte Schicht war porenfrei mit glatter Oberfläche. Auch nach dem Bearbeiten zeigte die Schicht eine hohe Qualität.

## Patentansprüche

1. Verfahren zum Beschichten von Werkstoffen durch Plasma-Pulverauftragsschweißen pulverförmiger Zusatzwerkstoffe unter Einsatz von Wechselstrom als Schweißstrom zum Erzeugen eines übertragenen Plasmalichtbogens für das Pulverauftragsschweißen, bei dem Wechselstrom einer Frequenz zwischen etwa 10 bis 100 Hz oder ein Gleichstrom, dem ein Wechselstrom einer Frequenz von etwa 10 bis 1000 Hz oder von etwa 1 bis 200 KHz überlagert ist für leicht oxidierbare Werkstoffe eingesetzt wird, wobei an einer aus einer Elektrode herausgeformten sphärischen oder kugelförmigen Ausformung ein Fußpunkt des Plasmalichtbogens hergestellt wird.

2. Verfahren nach Anspruch 1, dadurch gekennzeichnet, dass dem Gleichstrom eine mittelfrequente bzw. hochfrequente Spannung oder eine Rechteckspannung als Wechselstrom überlagert wird.

3. Verfahren nach Anspruch 1 oder 2, dadurch gekennzeichnet, dass mittels der Strömung der mit gesteuerter Strömungsgeschwindigkeit geführten Gase sich bildende Oxide oder Schlacken zerrissen und zum Rande eines entstehenden Schmelzbades bewegt werden.

4. Verfahren nach einem der Ansprüche 1 bis 3, dadurch gekennzeichnet, dass eine Verschleißschutzschicht folgender Zusammensetzung hergestellt wird: Si 5,0 Gew.-%; Cu 3,0 Gew.-%; Mg 0,5 Gew.-%; Rest Al.

5. Plasmabrenner mit stabartiger Kathode sowie diese umgebendem Gaskanal einer Brennerdüse, dem ein Düsendurchbruch engeren Querschnitts nachgeordnet ist, zur Durchführung des Verfahrens nach wenigstens einem der Ansprüche 1 bis 4, dadurch gekennzeichnet, dass an die Kathode (20, 32) des Plasmabrenners (10, 10ₐ) endwärtig eine sphärische oder kugelförmige Ausformung (34, 34ₐ) angeformt ist.

6. Plasmabrenner nach Anspruch 5, dadurch gekennzeichnet, dass die Anformung (34, 34ₐ) der Kathode (20, 32) eine Ebene (E) etwa tangiert, die von der Stirnfläche (17) einer der Kathode zugeordneten, den Düsendurchbruch (19) enthaltenden Anode (16) bestimmt ist.

7. Plasmabrenner nach Anspruch 5, dadurch gekennzeichnet, dass die Anformung (34, 34ₐ) der Kathode (20, 32) eine Ebene (E) in einem Abstand überragt, wobei die Ebene von der Stirnfläche (17) einer der Kathode zugeordneten, den Düsendurchbruch (19) enthaltenden Anode (16) bestimmt ist.

8. Plasmabrenner nach Anspruch 5, dadurch gekennzeichnet, dass die Anformung (34, 34ₐ) der Kathode (20, 32) innerhalb einer diese umgebenden, den Düsendurchbruch (19) enthaltenden Anode (16) in Abstand (a) zu einer Ebene (E) liegt, die von der Stirnfläche (17) der Anode bestimmt ist.

9. Plasmabrenner nach Anspruch 7 oder 8, dadurch gekennzeichnet, dass der Abstand zwischen der Anformung (34, 34ₐ) und der Stirnfläche (17) bzw. der Ebene (E) höchstens 4 mm, bevorzugt höchstens 3 mm, beträgt.

10. Plasmabrenner nach Anspruch 5 oder 8, dadurch gekennzeichnet, dass der Anformung (34, 34ₐ) der Kathode (20, 32) in Spaltabstand ein Schulterabsatz (36) als Übergang zwischen dem Gaskanal (18) und dem engeren Düsendurchbruch (19) gegenübersteht.

11. Plasmabrenner nach Anspruch 5 oder 10, dadurch gekennzeichnet, dass an den ringartigen Schulterabsatz (36) ein zylindrischer Abschnitt (17) des Gaskanals (18) als Aufnahme für die Anformung (34, 34ₐ) der Kathode (20, 32) anschließt.

12. Plasmabrenner zum Erzeugen eines Lichtbogens nach wenigstens einem der Ansprüche 5 bis 11, dadurch gekennzeichnet, dass die Anformung (34, 34ₐ) der Kathode (20, 32) den Fußpunkt des Lichtbogens bestimmt.

13. Plasmabrenner nach wenigstens einem der Ansprüche 5 bis 12, dadurch gekennzeichnet, dass die mit einem Wechselstrom oder mit einem Gleichstrom samt überlagerten Wechselstrom beaufschlagte Kathode (20, 32) wassergekühlt ist.

14. Plasmabrenner nach Anspruch 12 oder 13, dadurch gekennzeichnet, dass die Kathode (32) einen wassergekühlten Tragkörper (40) sowie einen austauschbar angesetzten Kathodenteil (33) aus einem hochschmelzenden Werkstoff mit geringer Wärmeleitfähigkeit für die Anformung (34ₐ) bzw. für den Fußpunkt des Lichtbogens aufweist, wobei gegebenenfalls der Tragkörper (40) aus Kupfer oder einer Kupferlegierung besteht.

15. Plasmabrenner nach wenigstens einem der Ansprüche 5 bis 14, dadurch gekennzeichnet, dass die Kathode (20) oder der austauschbare Kathodenteil (33) aus Wolfram oder einer Wolframlegierung besteht oder Kupfer zum Infiltrieren sowie Wolfram oder eine Wolframlegierung als Tränkwerkstoff aufweist.

16. Plasmabrenner nach Anspruch 15, dadurch gekennzeichnet, dass das Wolfram für die Kathode (20) oder den austauschbaren Kathodenteil (33) mit Thorium legiert ist.

17. Plasmabrenner nach wenigstens einem der Ansprüche 5 bis 14, dadurch gekennzeichnet, dass die Kathode (20) oder der austauschbare Kathodenteil (33) aus einem hochschmelzenden Nitrid, Karbid, Borid oder Silicid geringen elektrischen Widerstandes hergestellt ist, oder dass die Kathode (20) oder der austauschbare Kathodenteil (33) aus Titankarbid oder einer Titankarbid-Sinterlegierung besteht.

18. Plasmabrenner nach einem der Ansprüche 5 bis 17, dadurch gekennzeichnet, dass die Kathode (20) bzw. der austauschbare Kathodenteil (33) mit einem Tränkwerkstoff aus Hartstoffen geringer Sputterrate hergestellt ist, oder dass die Kathode (20) bzw. der austauschbare Kathodenteil (33) aus mit Wolfram, Titankarbid, Titannitrid, Hafniumnitrid und/oder Chromkarbid beschichtetem Kupfer oder einer entsprechend beschichteten Kupferlegierung besteht.

## Claims

1. Process for coating materials by the plasma powder hard surfacing of powdered additives using alternating current as a welding current for generating a transmitting plasma arc for the powder hard surfacing, in which an alternating current of a frequency between around 10 to 100 Hz or a direct current, which is superimposed by an alternating current at a frequency of around 10 to 1000 Hz or around 1 to 200 KHz, is used for easily oxidisable materials, wherein a base point of the plasma arc is produced at a spherical or bulbous development of an electrode.

2. Process according to claim 1, characterised in that the direct current is superimposed by a medium-frequency or high-frequency voltage or a square-wave voltage as an alternating current.

3. Process according to claim 1 or 2, characterised in that, by means of the flow of the gases conducted at controlled flow velocity, oxides or slag thus produced is broken up and moved to the edge of a resulting molten bath.

4. Process according to one of the claims 1 to 3, characterised in that an anti-abrasion layer of the following composition is produced: Si 5.0 percent by weight; Cu 3.0 percent by weight; Mg 0.5 percent by weight; remainder Al.

5. Plasma burner with rod-type cathode as well as a gas channel of a burner nozzle enclosing this cathode, which burner nozzle is followed by a nozzle opening with a more narrow cross-section, for implementing the process according to at least one of the claims of 1 to 4, characterised in that a spherical or bulbous development (34, 34a) is formed onto the cathode (20, 32) of the plasma burner (10, 10a) towards the end.

6. Plasma burner according to claim 5, characterised in that the development (34, 34a) of the cathode (20,33)is roughly tangent to a plane (E), which is determined by the front surface (17) of an anode (16) assigned to the cathode and containing the nozzle opening (19).

7. Plasma burner according to claim 5, characterised in that the development (34, 34a) of the cathode (20, 32) rises above a plane (E) at a distance, wherein the plane is determined by the front surface (17) of an anode (16) assigned to the cathode and containing the nozzle opening (19).

8. Plasma burner according to claim 5, characterised in that the development (34, 34a) of the cathode (20, 32) lies within an anode (16) enclosing the latter and containing the nozzle opening (19) at a distance (a) from a plane (E), which is determined by the front surface (17) of the anode.

9. Plasma burner according to claim 7 or 8, characterised in that the distance between the development (34, 34a) and the front surface (17) or plane (E) is 4 mm at most, preferably 3 mm at most.

10. Plasma burner according to claim 5 or 8, characterised in that, as a transition between the gas channel (18) and the narrow nozzle opening (19), a shoulder recess (36) faces the development (34, 34a) of the cathode (20, 32) at a gap distance.

11. Plasma burner according to claim 5 or 10,characterised in that a cylindrical section (17) of the gas channel (18) is connected to the ring-type shoulder recess (36) as the seat for the development (34, 34a) of the cathode (20, 32).

12. Plasma burner for generating an arc according to at least one of the claims 5 to 11, characterised in that the development (34, 34a) of the cathode (20, 32) determines the base point of the arc.

13. Plasma burner according to at least one of the claims 5 to 12, characterised in that the cathode (20, 32) which is subjected to an alternating current or a direct current together with the superimposed alternating current is water-cooled.

14. Plasma burner according to claim 12 or 13, characterised in that the cathode (32) has a water-cooled supporting body (40) and an interchangeably connected cathode part (33) made of high-melting material with low thermal conductivity for the development (34a) or the base point of the arc, wherein the supporting body (40) consists of copper or a copper alloy if so required.

15. Plasma burner according to at least one of the claims 5 to 14, characterised in that the cathode(20) or the interchangeable cathode part (33) consists of tungsten or a tungsten alloy or has copper for infiltration and tungsten or a tungsten alloy as an impregnating material.

16. Plasma burner according to claim 15, characterised in that the tungsten for the cathode (20) or the interchangeable cathode part (33) is alloyed with thorium.

17. Plasma burner according to at least one of the claims 5 to 14, characterised in that the cathode (20) or the interchangeable cathode part (33) is manufactured from a high-melting nitride, carbide, boride or silicide of low electrical resistance or that the cathode (20) or the interchangeable cathode part (33) consists of titanium carbide or a titanium carbide sintered alloy.

18. Plasma burner according to at least one of the claims 5 to 17, characterised in that the cathode (20) or the interchangeable cathode part (33) is manufactured with an impregnating material made of hard substances with a low sputter rate or that the cathode (20) or the interchangeable cathode part (33) consists of copper coated with tungsten, titanium carbide, titanium nitride, hafnium nitride and/or chrome carbide or an appropriately coated copper alloy.

## Revendications

1. Procédé de revêtement de matériaux par soudure de superposition de produits au plasma de matériaux d'addition pulvérulents sous l'action de courant alternatif comme courant de soudage pour créer un arc électrique au plasma pour la soudure par superposition de produits pulvérulents, dans lequel on utilise du courant alternatif présentant une fréquence comprise entre environ 10 ET 100 Hz ou bien un courant continu auquel est superposé un courant alternatif présentant une fréquence d'environ 10 à 1000 Hz ou d'environ 1 à 200 KHz, pour des matériaux facilement oxydables, dans lequel une racine de l'arc à plasma est formée sur un bossage ou une partie saillante sphérique ou en forme de bille façonné à partir d'une électrode.

2. Procédé selon la revendication 1, caractérisé en ce qu'est superposée au courant continu, comme courant alternatif, une tension à fréquence moyenne ou à haute fréquence, ou bien une tension carrée.

3. Procédé selon la revendication 1 ou 2, caractérisé en ce qu'à l'aide de l'écoulement des gaz conduits à vitesse d'écoulement contrôlée, on déchire les oxydes et les scories qui se forment et on les repousse sur le bord d'un bain de fusion en formation.

4. Procédé selon l'une des revendications 1 à 3, caractérisé en ce qu'on forme une couche de protection contre l'usure présentant la composition suivante : Si 5,0 % en poids, Cu 3,0 % en poids, Mg 0,5 % en poids, le reste étant de l'Al.

5. Brûleur à plasma comprenant une cathode en forme de tige ainsi qu'un canal de gaz d'une tuyère de brûleur entourant cette cathode, tuyère qui est suivie par une ouverture de tuyère de plus petit diamètre, pour la mise en oeuvre du procédé selon au moins l'une des revendications 1 à 4, caractérisé en ce qu'un bossage (34 34ₐ) sphérique ou en forme de bille est façonné à l'extrémité de la cathode (20, 32) du brûleur à plasma (10, 10ₐ).

6. Brûleur à plasma selon la revendication 5, caractérisé en ce que le bossage (34, 34ₐ) de la cathode (20, 32) est sensiblement tangent à un plan (E), qui est défini par la surface frontale (17) d'une anode (16) ) associée à la cathode et contenant l'ouverture de tuyère (19).

7. Brûleur à plasma selon la revendication 5, caractérisé en ce que le bossage (34, 34ₐ) de la cathode (20, 32) dépasse d'une certaine distance le plan (E), ce plan étant défini par la surface frontale (17) d'une anode (16) associée à la cathode et contenant l'ouverture de tuyère (19).

8. Brûleur à plasma selon la revendication 5, caractérisé en ce que le bossage (34, 34ₐ) de la cathode (20, 32) est situé à l'intérieur d'une anode (16) entourant la cathode et contenant l'ouverture de tuyère (19), à une distance (a) par rapport à un plan (E), qui est défini par la surface frontale (17) de l'anode.

9. Brûleur à plasma selon la revendication 7 ou 8, caractérisé en ce que la distance entre le bossage (34, 34ₐ) et la surface frontale (17) ou le plan (E) est d'au plus 4 mm, de préférence d'au plus 3 mm.

10. Brûleur à plasma selon la revendication 5 ou 8, caractérisé en ce qu'est situé à l'opposé du bossage (34, 34ₐ) de la cathode (20, 32) à distance de fente un gradin d'épaulement (36) qui sert de transition entre le canal de gaz (18) et l'ouverture de tuyère (19) plus étroite.

11. Brûleur à plasma selon la revendication 5 ou 10, caractérisé en ce qu'au gradin d'épaulement de forme annulaire (36) se raccorde un tronçon cylindrique (17) du canal de gaz (18), pour servir de logement au bossage (34, 34ₐ) de la cathode (20, 32).

12. Brûleur à plasma pour créer un arc électrique selon au moins l'une des revendications 5 à 11, caractérisé en ce que le bossage (34, 34ₐ) de la cathode (20, 32) détermine la racine de l'arc électrique.

13. Brûleur à plasma selon au moins l'une des revendications 5 à 12, caractérisé en ce que la cathode (20, 32) parcourue par un courant alternatif ou par un courant continu auquel est superposé un courant alternatif est refroidie à l'eau.

14. Brûleur à plasma selon la revendication 12 ou 13, caractérisé en ce que la cathode (32) comporte un corps de support (40) refroidi à l'eau, ainsi qu'une pièce de cathode (33) montée interchangeable et réalisée en un matériau à point de fusion élevé et à faible conductibilité thermique pour le bossage (34ₐ) ou pour la racine de l'arc électrique, le corps de support (40) étant réalisé, le cas échéant, en cuivre ou un alliage cuivreux.

15. Brûleur à plasma selon au moins l'une des revendications 5 à 14, caractérisé en ce que la cathode (20) ou la pièce de cathode interchangeable (33) est réalisée en tungstène ou un alliage de tungstène ou bien comporte du cuivre pour réaliser l'infiltration du tungstène ou d'un alliage de tungstène, qui sert de matériau d'imprégnation.

16. Brûleur à plasma selon la revendication 15, caractérisé en ce que le tungstène pour la cathode (20) ou pour la pièce de cathode interchangeable (33) est alliée à du thorium.

17. Brûleur à plasma selon au moins l'une des revendications 5 à 14, caractérisé en ce que la cathode (20) ou la pièce de cathode interchangeable (33) est réalisée en un nitrure, carbure, borure ou siliciure, à point de fusion élevé et à faible résistance électrique, ou bien en ce que la cathode (20) ou la pièce de cathode interchangeable (33) est réalisée en carbure de titane ou en un alliage fritté à base de carbure de titane.

18. Brûleur à plasma selon au moins l'une des revendications 5 à 17, caractérisé en ce que la cathode (20) ou la pièce de cathode interchangeable (33) est réalisée en un matériau d'imprégnation constitué de matière dure à faible taux de pulvérisation, ou bien en ce que la cathode (20) ou la pièce de cathode interchangeable (33) est réalisée en cuivre revêtu de tungstène, carbure de titane, nitrure de titane, nitrure de hafnium et/ou carbure de chrome ou en un alliage cuivreux revêtu de façon correspondante.
